# EUROPEAN PATENT APPLICATION

(11) **EP 2 719 731 A1**
(43) Date of publication of application: **16.04.2014**
(21) Application number: 12188168.4
(22) Date of filing: 11.10.2012
(51) Int. Cl.: C09D 5/00, C09D 5/08, C09D 7/12, C09F 7/00

(54) **Aqueous coating composition including the reaction product of maleic anhydride with an unsaturated compound and an amine.**

(71) Applicant: Akzo Nobel Coatings International B.V., 6824 BM Arnhem (NL)
(72) Inventor: Craun, Gary Pierce, BEREA, OH Ohio 44017 (US); Rademacher, Jude Thomas, AKRON, OH Ohio 44320 (US); Geelen, Patricia, NL-6413 EJ HEERLEN (NL)
(74) Representative: Akzo Nobel IP Department

(57) **Abstract**

An aqueous coating composition comprising
a. a binder polymer
b. a maleimide compound having sufficient acid groups such that the acid value of the maleimide compound is at least 30mg KOH/g of the maleimide compound.

## Description

This invention relates to aqueous coating compositions, especially protective coatings comprising maleimide compounds, The coating compositions exhibit improved adhesion and corrosion resistance when applied to metallic substrates, especially aluminium, bare steel and corroded steel.

Many metals corrode when exposed to oxygen, forming a metal oxide crust in the process. We are all familiar with the rust that forms on ferrous metals. Not only is the rust disfiguring and unsightly, but it also weakens any structure constructed from the metal.

Special coatings, known as metal primers, have been formulated to be applied direct to the metal in order to prevent such corrosion. The coatings typically contain very high levels of anti-corrosion pigments such as zinc phosphate and are typically grey in colour. Such primers must be further coated with a topcoat layer to provide the desired aesthetic look of a coated article.

We have now discovered that incorporating small amounts of a particular group of compounds into aqueous coating compositions allows coatings to be made which have excellent adhesion to and corrosion resistance on bare metals. Surprisingly, the compositions also exhibit excellent corrosion resistance over rusted steel, even when the composition is free of anti-corrosion pigments.

Accordingly, there is provided an aqueous coating composition comprising
a. binder polymer
b. a maleimide compound having sufficient acid groups such that the acid value of the maleimide is at least 30 mg KOH/g of the maleimide compound

Preferably the maleimide compound is the reaction product of
i. an unsaturated organic compound comprising at least one non-aromatic unsaturated carbon-carbon bond
ii. maleic anhydride and
iii. primary amine

Preferably the maleimide comprises from 0.5 to 5wt% of the coating composition. Above 5wt% can cause the adhesion to deteriorate and below 0.5wt% there is no improvement in corrosion performance.

The aqueous coatings of the present invention is especially useful for coating bare metal substrates where they provide improved adhesion of the dried coating to bare steel, rusted steel, galvanised steel, electrocoated tin plate steel and aluminium and can also improve corrosion resistance.

The maleimide contains the molecular fragment O=C-N(R)-C=O where R is an alkyl or aryl group. Preferably, the alkyl or aryl group contains from up to 30 carbon atoms.

The unsaturated carbon-carbon bond of the unsaturated organic compound is preferably a double bond. Since double bonds are common in nature, the organic compound may be obtained or derived from a renewable resource such as vegetable oils, fish oils or animal fats.

In practice, commercially useful compounds contain double bonds and they may be singly-unsaturated - containing only one double bond; or multiply-unsaturated - containing more than one double bond. Multi-unsaturated compounds may contain conjugated or non-conjugated double bonds. Conjugated double bonds are separated by only one single carbon-carbon bond whereas non-conjugated double bonds are separated by more than one single carbon-carbon bond.

The reaction of maleic anhydride with such unsaturated bonds is by the Diels-Alder reaction or the Alder-ene reaction.

Preferably, the unsaturated organic compound is selected from the group comprising or consisting of unsaturated vegetable oils, unsaturated fish oils, unsaturated fatty acids, terpenes and alkenes.

Vegetable oils comprise triglycerides, being tri-esters of glycerol and fatty acids. The triglycerides making up unsaturated vegetable oils comprise at least one unsaturated fatty acid. The fatty acids preferably have chain length of from 12 to 24 carbon atoms and the triglyceride can comprise the same or different fatty acids, including saturated fatty acids.

Suitable unsaturated vegetable oils include soy bean oil, linseed oil, tall oil; sunflower oil, corn oil, hempseed oil, perilla oil, poppyseed oil and canola oil. Preferably, soy bean oil is used.

Suitable unsaturated fatty acids include tall oil fatty acids, soya fatty acids, oleic acid, linoleic acid, α-eleostearic acid, β-eleostearic acid; and sucrose fatty acid esters such as Sefose available from Proctor and Gamble.

Suitable terpenes include limonene or terpene carboxylates such as abietic acid gum rosin and wood rosin.

Suitable alkenes include decene and dodecene.

Primary amines have the general formula RNH₂ where R can be an alkyl or aryl group preferably with from 2 to 30 carbon atoms, more preferably from 3 to 12 carbon atoms.

Examples of suitable primary amines include the alkylamines such as 2-ethyl hexylamine, hexylamine and benzylamine. R may be substituted with an acid group such as carboxyl, phosphoric. Where the acid group is carboxyl, R is an amino acid. Examples of suitable amino acids include glycine, β-alanine, arginine, asparagine, cysteine, leucine and glutamine. Preferably, β-alanine is used. Preferably, the acid and the amine group of the amino acid are separated by more than one carbon atom as such amino acids are more reactive than when the groups are separated by only one carbon atom.

The acid value of the maleimide is preferably sufficiently high to enable the maleimide to be dispersible, preferably soluble, in water or aqueous media when neutralized. The solubility of the maleimide will depend partly on the hydrophobicity of the maleimide itself and also the nature of the aqueous medium in which it is to be dissolved or dispersed.

Preferably the acid value is from 30 to 300 mg KOH/g maleimide compound, more preferably from 50 to 150mg KOH/g. Preferably the acid value of the maleimide is provided by carboxyl groups.

Where the unsaturated organic compound contains an acid group, for example when the compound is an unsaturated fatty acid, the primary amine itself need not contain acid groups. Preferably, the unsaturated organic compound and/or the primary amine comprise acid groups.

By aqueous is meant that the continuous phase of the composition comprises at least 50% water, preferably at least 65%, more preferably, 80%, even more preferably, 90% and most preferably, 100% water. The remainder of the continuous phase may comprise organic solvents. These may be water soluble, partly water soluble or water insoluble. Preferably, they are partly water soluble and most preferably they are water soluble. The solubility is assessed at 23°C.

Suitable solvents include n-butanol and ethylene glycol monobutyl ether.

The acid groups of the maleimide may be partially or fully neutralised prior to addition to the coating composition to facilitate dissolution or dispersion in the continuous phase of the aqueous coating composition. Alternatively, an aqueous emulsion of the maleimide may be pre-formed by adding a neutralising agent to the maleimide and diluting with water whilst stirring. Such emulsions are often more convenient to incorporate into aqueous compositions.

Suitable neutralising agents include ammonia, amines, alkali metal bases and mixtures thereof.

Suitable amines include dimethyl amino ethanol, triethylamine, amino-2-methyl propanol, dimethyl amino propanol, dimethyl amino-2-methyl propanol.

Suitable alkali metal bases include, potassium hydroxide, sodium hydroxide.

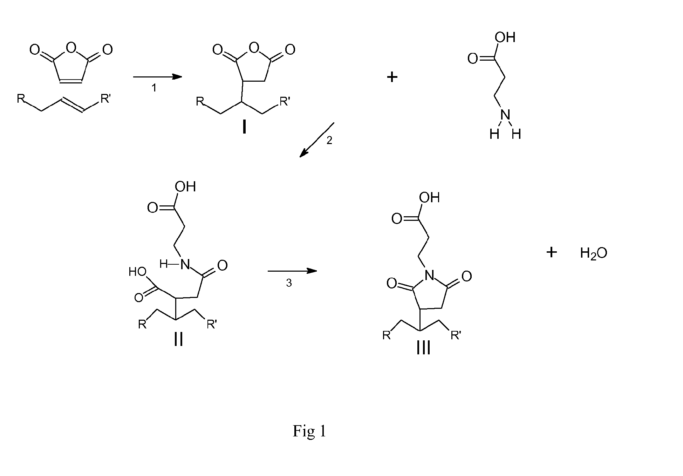

Figure 1 shows the steps in a suggested reaction scheme where the primary amine is an amino acid, β-alanine.

Step 1 is the reaction of an unsaturated organic compound, in this case having one double bond, with the maleic anhydride to form a maleinised intermediate (I).

Step 2 shows the reaction of the maleinised intermediate (I) with the primary amine to form amic acid (II) which goes on to lose water in step 3 to form the maleimide (III).

Preferably the coating composition has a gloss of at least 80 gloss units when measured at 60 degrees.

The composition is preferably free of anti-corrosion pigments as the presence of such pigments can reduce the gloss to unacceptably low levels. It is not clear why anti-corrosive pigments should decrease the gloss.

Anti-corrosion pigments are well known and used extensively in the coatings industry to provide paints which prevent metal substrates to which they are applied from corroding. Surprisingly, coatings of the present invention which are free of such anti-corrosion pigments, may be applied directly to bare metal, in particular steel, and yet protect the metal from corrosion.

Surprisingly, the adhesion of the dried coating to bare steel is also substantially improved.

Examples of anti-corrosion pigments that preferably are avoided include potassium silicate; hydrogen phosphates such as CaHPO₄, MgHPO₄ and SrHPO₄; orthophosphates such as coprecipitated zinc orthophosphate, zinc orthophosphate hydrate, zinc aluminium orthophosphate and organically modified basic; polyphosphates such as strontium aluminium polyphosphate hydrate, zinc aluminium polyphosphate hydrate, magnesium aluminium polyphosphate, zinc aluminium triphosphate and magnesium aluminium triphosphate; phosphosilicates such as calcium strontium phosphosilicates and strontium zinc phosphosilicate; other phosphates such as zinc phosphate and strontium borophosphate; hybrid pigments using mixtures of inorganic and organic inhibitors such as zinc phosphate and zinc oxide and zinc (2,5-dimercapto-1,3,4-thiadazole)₂ also known as (DMTD)₂; metal oxides such as oxides of zinc, magnesium, aluminium, lithium, molybdenum, strontium, cerium and mixtures thereof; metals like metallic zinc, metallic magnesium and magnesium alloys; and ion exchange pigments such as calcium, magnesium.

Such pigments are insoluble in the paint and thus exist in the paint in particulate form.

Anti-corrosion pigments differ from non-pigment corrosion inhibitors. Such non-pigment corrosion inhibitors are materials which are soluble in organic or aqueous media, at least up to about 5wt% based on the liquid coating formulation. Examples of such corrosion inhibitors include azoles such as imidazoles, thiazoles, tetrazoles and triazoles and 2-mercaptobenzothiazole; amines like N-phenyl-1,4- phenylenediamine and Schiff bases like N,N'-o-phenylen-bis(3methoxysalicylidenimine); amino acids like tryptophan thiol compounds like DMTD or 1-phenyl-2, 5-dithiohydrazodicarbonamide; phthalazin derivatives including 2-[(7-anilino-5-[1,2,4]triazolo [3,4-b][1,3,4]thiadiazin-3-yl)methyl]phthalazin-1(2H)-one; tannins and substituted uracils; phosphonic acid group containing materials including styrenephosphonic acid; succinic acid; 2-(1,3 benzothiazol-2ylthio)succinic acid.

Such non-pigment corrosion inhibitors may be used in the present invention at levels from 0 to 5.0wt%, preferably from 0.5 to 3.0wt%, more preferably from 0.5 to 2.0wt%, yet more preferably from 0.5 to 1.0wt%. However, most preferably the coating is free of any such non-pigment corrosion inhibitors.

Like many waterborne compositions applied to bare steel, the compositions of the present inventions preferably contain flash rust inhibitors to prevent corrosion occurring during or soon after the application process. The rust appears as a stain immediately after or within hours of the coating being applied to the metal substrate. Such flash rust inhibitors are used in very small amounts, preferably at least 0.1 to 0.5 % by weight based on the 100% liquid formulation, more preferably from 0.15 to 0.45, even more preferably from 0.2 to 0.4 and most preferably from 0.25 to 0.35%.

Flash rust inhibitors fall into two groups namely, nitrite containing and nitrite-free. Suitable nitrite containing inhibitors include sodium nitrite. Suitable nitrite-free inhibitors include alkanolamine borate; amino carboxylates such as Halox 510; phosphate salts such as neutralised form of phosphate co-ester of aliphatic alcohols; specially formulated film forming inhibitor based on an organic zinc complex and a nitrogen compound (such as Nalzin FA 379); high ratio copolymerised calcium sulphonate (such as Termarust TR2010R1).

Suitable flash rusting inhibitors include the nitrite-free range available from Halox, such as Halox 510, 515 and 570; Flash-X 330, 350D; Wayneflash 115; Nubirox FR20; WorleeADD 358; Nalzin 3358, 379, 579; Raybo 90 NoRust NF; Termarust TR2010R; Rodine Flash Rust Inhibitor; Heucorin FR; Vancor 081; Nacorr 1352, 1652, 1754, 4426, XR; Synthro Cor C 08B, C660B, CA50B; Strodex MOK-70 potassium salt.

Also available are the nitrite containing flash rust inhibitors such as Flash X 150; Wayneflash 110, 111; Nubirox FR10; Nalzin 179; Cortec M-111, M-240, M-435, 380; Synthro cor EV B; Vancor 073; Worlee Add 357; Drew2gard 794 SA, 795A; Additive EDA, ETE, IDA, TA-40, TA-41.

Nitrite free flash rust inhibitors are preferred.

The coating composition of the invention may further contain pigments which are not anti-corrosion pigments such as coloured pigments. Such non-anti-corrosion pigments may be organic or inorganic, including carbon black titanium dioxide, phthalocyanine blue, iron oxide; metal flake pigments such as iron, aluminium and bronze.

Suitable binder polymers for use in the invention include acrylic polymers, styrene-acrylic polymers, polyurethane polymers, alkyd polymers, epoxy ester polymers and mixtures and/or hybrids thereof. Preferably acrylic polymers or styrene-acrylic polymers are used and most preferably acrylic polymers are used.

By acrylic polymer is meant that the polymer is derived only from monomers selected from the esters of acrylic acid and methacrylic acid and the acids themselves. A styrene-acrylic polymer further comprises styrene or a derivative of styrene such as α-methyl styrene or vinyl toluene.

The binder polymer preferably forms a coherent film at ambient temperatures of from 0 to 40°C, preferably from 5 to 30°C and most preferably from 5 to 25°C.

The binder can comprise an aqueous dispersion of particles formed directly using known emulsion polymerization processes. Such dispersions are often referred to as latex.

Alternatively, an emulsion of a polymer can be made by emulsifying the polymer itself or the polymer dissolved in solvent, in aqueous medium using high shear mixing and optionally in the presence of surfactants.

Where the polymer is in the form of a dispersion of polymer particles such dispersion are conveniently and preferably made using emulsion polymerisation methods, including mini-emulsion polymerization or microsuspension polymerization.

For simplicity, the word 'polymer' in this specification is used to cover homopolymers and copolymers comprising two or more monomer variants.

Suitable monomers to prepare the binder polymer includestyrene, alpha-methyl styrene, alkyl esters of acrylic or methacrylic acid such as methyl methacrylate, ethyl methacrylate, butyl methacrylate, ethyl acrylate, butyl acrylate, hexyl acrylate, n-octyl acrylate, lauryl methacrylate, 2-ethylhexyl methacrylate, nonyl acrylate,decyl acrylate, benzyl methacrylate, isobutyl methacrylate, isobornyl methacrylate the hydroxyalkyl esters of the same acids such as 2-hydroxyethyl acrylate, 2-hydroxyethyl methacrylate, 2-hydroxypropyl methacrylate, glycidyl acrylate and glycidyl methacrylate, acrylic acid and methacrylic acid.

A method of protecting a metal substrate including the steps of applying a coating composition of the invention and causing it to form a solid coating.

In another aspect of the invention there is provided a metal substrate coated with a coating composition of the invention.

In another aspect of the invention there is provided a method of providing corrosion resistance to a metal substrate including the steps of applying a coating composition of the invention to the metal substrate and causing it to form a solid coating.

In another aspect of the invention there is provided a method of preparing the aqueous composition of the invention comprising the steps
i. reacting an unsaturated organic compound comprising at least one non-aromatic unsaturated carbon-carbon bond with maleic anhydride to form a maleated intermediate
ii. reacting the maleated intermediate with a primary amine to form an amic acid mixture
iii. evolving water from the mixture to form a maleated compound
iv. neutralising the maleated compound in the presence of water to form an aqueous dispersion
v. and mixing the aqueous dispersion with a binder polymer to form an aqueous dispersion to form an aqueous coating formation.

The coating composition of the invention may further contain conventional additives for coatings. Suitable such additives include thickeners, defoamers, anti-foam agent, flow aids, anti-crater agents, wetting agents and cure agents.

The coating compositions may be applied to a substrate using known methods including brush, roller, blade, pad, spray and dip

The invention will now be illustrated by the following examples.

### Ingredients

The following ingredients were used in the examples.

Soy bean oil available from Sigma Aldrich

Gum Rosin available from Sigma Aldrich

Texanol is an ester alcohol solvent available from Eastman.

Nalzin FA179 is flash rust inhibitor available from Elementis Specialties

### Tests

The acid value was measured using the following procedure.

About 0.1 g of sample is dissolved in a 1:1 mixture of xylene and isopropanol and one drop of phenolphthalein in ethanol is added to the resulting mixture. The mixture is then titrated to a light pink end point using 0.1 normal potassium hydroxide solution.

### Example 1a

### Preparation of a maleimide from an unsaturated vegetable oil

The following ingredients were reacted according to the method described below.

| | g | mol |
|---|---|---|
| Soy bean oil | 150.0 | 0.17 |
| Xylene | 3.0 | |
| Maleic anhydride | 50.0 | 0.51 |
| β-alanine | 45.5 | 0.51 |

### Step 1

### Preparation of the maleinised oil intermediate:

The soybean oil, xylene and maleic anhydride were added (under a nitrogen blanket) to a 1 litre flask (equipped with stirrer and condenser) whilst stirring. The temperature was raised to 180°C and then further increased to 220 °C over 45 minutes. This temperature was held for 1.5 hours after which time the mixture was cooled to 100°C. Note: the xylene washes down subliming maleic anhydride and thus gives better conversion and a cleaner reaction. It distilled off in step 2 with the water.

### Step 2

### Conversion of maleinised oil intermediate to maleimide:

The reflux condenser was removed from the flask and replaced with a Dean and Stark condenser allowing vapors to be removed and collected from the flask. The β-alanine was added and the temperature increased to 170°C over 1 hour. Care is required to control the resulting exotherm and foaming from the reaction of the anhydride and the amine. As foaming subsides at 170°C a vacuum is applied to drive the reaction forward. About 7g water was collected over about 2 hours at 170°C as the maleimide was formed.

### Example 1b

### Formation of an emulsion:

The maleimide was cooled to about 90°C, and 35g of dimethylethanol amine dissolved in 100g was added over about 2 minutes. A further 408g of water was added over about 15 minutes with good agitation (400 rpm, 3 inch flat blade) as the emulsion was formed and cooled. The solids content of the emulsion was 20.4%.

### Example 2

### Formation of a maleimide from rosin

### Preparation of the maleinised rosin

The same procedure was followed as in example 1 but using the following ingredients.

| | g | mol |
|---|---|---|
| Gum Rosin | 135.0 | 0.40 |
| Xylene | 3.0 | |
| Maleic anhydride | 45.0 | 0.46 |
| β-alanine | 41.0 | 0.46 |

### Formation of an emulsion

The same procedure was followed as in example 1 except that 33g of dimethyl amino ethanol was used and a total of 602g of water.

### Example 3 (Paint)

### Preparation of a paint containing the aqueous maleimide emulsion of example 1b.

The ingredients listed below were added to a 100 cm³ container in the order indicated under using mild stirring conditions.

| | g |
|---|---|
| ³ Acrylic latex | 40.00 |
| ¹ Texanol | 0.80 |
| ² Nalzin FA179 | 0.12 |
| Black colorant (22wt% carbon black) | 1.20 |
| Emulsion of Example 1b | 2.00 |

| | |
|---|---|
| ¹ Cosolvent - 2,2,4-trimethyl-1,3 pentanediol-monoisobutyrate ² Comprises sodium nitrite, zinc salts of C6-C19 fatty acids, morpholine benzoate and undisclosed proprietary material. ³ 45.5% solids content of MFFT 12-16°C | |

Once the additions were complete, stirring continued for a further 10 minutes and the mixture left to stand overnight.

### Comparative Example A (Paint)

The same ingredients and process was used as in example 2 other than that Example 1b was omitted from the paint.

### Preparation of panels I and II

Example 3 and Comparative Example A were applied to steel panels using the method described below.

Two 10 x 20 cm cold rolled steel panels were cleaned of the protective oil layer by wiping with a solvent mixture (xylene and acetone at a ratio of 35:65) and allowed to dry. When dry, the panel was dry sanded using sandpaper. The panels were then wiped with absorbent paper. A 135 micron wet layer of paint was drawn down using a roll bar to give a dry paint film thickness of about 55 microns.

### Testing

### Adhesion

Following application of the paint to the cleaned bare steel panels according to the method described above, the panels were allowed to dry at room temperature (20-25°C) for 24 hours. They were then cross-hatched with a sharp knife using a template, the distance between the lines being 1 mm, following which adhesive tape (Scotch filament tape 8981) was firmly applied over the cross-hatched area. The tape was then removed in one swift, sharp action and the percentage of the cross-hatched area removed assessed.

### Corrosion

The paint was applied to the cleaned bare steel panels as described above to give a 50µm dry paint layer and then allowed to dry for 24 hours. The panels were scribed with a cross using a knife (Erichsen type 463). The scribed panels were then exposed to an accelerated cyclical salt spray corrosion test in accordance with ASTM G85-A5.

Any blisters are evaluated according the ASTM D714-02 where the size and density are estimated. Blister size 8 is the smallest blister size with 6, 4 and 2 representing progressively larger blister. The density is self-explanatory.

### Results

| Panel | Steel Panel painted with | Adhesion/% removed | Corrosion |
|---|---|---|---|
| I | Example 3 | 0 | Body: No corrosion or blisters. |
| | | | Scribed cut: Blisters 8, very few/few |
| II | Comparative Example A | 100 | Body: No corrosion. |
| | | | Blisters 4, few. |
| | | | Scribed cut: Blisters 6, dense. |

### Preparation of Panels III and IV

Paint example 3 and Comparative Example A were also tested over corroded steel panels. The panels were prepared and tested in the same way as panels I and II.

## Claims

1. An aqueous coating composition comprising
a. a binder polymer
b. a maleimide compound having sufficient acid groups such that the acid value of the maleimide compound is at least 30mg KOH/g of the maleimide compound.

2. A coating composition according to claim 1 wherein the maleimide compound is the reaction product of
i. an unsaturated organic compound comprising at least one non-aromatic unsaturated carbon-carbon bond
ii. maleic anhydride and
iii. primary amine.

3. A coating composition according to claim 1 or claim 2 wherein the unsaturated organic compound and/or the primary amine comprise acid groups.

4. A coating composition according to any one of the preceding claims wherein the unsaturated organic compound is selected from the group comprising or consisting of unsaturated vegetable oils, unsaturated fish oils, unsaturated fatty acids, terpenes and alkenes.

5. A coating composition according to any one of the preceding claims wherein the primary amine is β-alanine.

6. A coating composition according to any one of the preceding claims and further comprising sufficient neutralising agent to at least partially neutralise the acid groups of the maleimide.

7. A coating composition according to any one of the preceding claims wherein the composition is free of anti-corrosion pigments.

8. A coating composition according to any one of the preceding claims wherein the composition comprises from 0.5 to 5wt% maleimide based on the liquid coating composition.

9. A coating composition according to any one of the preceding claims and further containing from 0.1 to 0.5% by weight of flash rust inhibitor calculated on the liquid coating composition.

10. A coating composition according to any one of the preceding claims which is free of non-pigment corrosion inhibitor.

11. A coating composition according to any one of the preceding claims comprising non-anti-corrosion pigments.

12. A coating composition according to claim 11 wherein the pigments comprise metal flake pigments.

13. A method of preparing the coating composition of any one of the previous claims comprising the steps of
i. reacting the unsaturated organic compound comprising at least one non-aromatic unsaturated carbon-carbon bond with maleic anhydride to form a maleated intermediate
ii. reacting the maleated intermediate with a primary amine to form an amic acid mixture
iii. evolving water from the mixture to form a maleated compound
iv. neutralising the maleated compound in the presence of water to form an aqueous dispersion and
v. mixing the aqueous dispersion with a binder polymer to form an aqueous dispersion to form an aqueous coating composition.

14. A method of protecting a metal substrate including the steps of applying a coating composition according to any on claims 1 to 12 and causing it to form a solid coating.

15. A metal substrate coated with a coating according to any one of claims 1 to 12.
